Europäisches Patentamt

European Patent Office

Office européen des brevets

(11) Veröffentlichungsnummer: **0 016 326**
**B1**

(12) **EUROPÄISCHE PATENTSCHRIFT**

(45) Veröffentlichungstag der Patentschrift:
16.06.82

(21) Anmeldenummer: 80100564.6

(22) Anmeldetag: 04.02.80

(51) Int. Cl.³: **G 05 D 16/06, F 24 H 9/20,**
**F 23 N 1/00**

(54) **Gasdruckregler.**

(30) Priorität: 14.02.79 DE 2906044

(43) Veröffentlichungstag der Anmeldung:
01.10.80 Patentblatt 80/20

(45) Bekanntmachung des Hinweises auf die Patenterteilung:
16.06.82 Patentblatt 82/24

(84) Benannte Vertragsstaaten:
AT BE CH FR GB IT LU NL SE

(56) Entgegenhaltungen:
DE-A-2141802
DE-A-2253091
DE-B2-1550293
US-A-3654948

(73) Patentinhaber: Joh. Vaillant GmbH u. Co, Berghauser
Strasse 40 Postfach 10 10 20, D-5630 Remscheid (DE)
(84) Benannte Vertragsstaaten: AT BE CH FR GB IT LU NL SE

(73) Patentinhaber: COFRABEL N.V., Goldenhopestraat 15,
B-1620 Drogenbos (BE)
(84) Benannte Vertragsstaaten: BE

(73) Patentinhaber: VAILLANT S.A.R.L, 4, Rue des Oliviers
Orly-Sénia 326, F-94537 Rungis Cedex (FR)
(84) Benannte Vertragsstaaten: FR

(73) Patentinhaber: K.W. PAULUS & CO. LTD., Paulus House
Heston Aerodrome Off Phoenix Way, Hounslow TW5 9ND
(GB)
(84) Benannte Vertragsstaaten: GB

(73) Patentinhaber: SCHONEWELLE B.V., Ellermanstraat 17,
NL-1099 BX Amsterdam (NL)
(84) Benannte Vertragsstaaten: NL

(73) Patentinhaber: VAILLANT Ges.m.b.H,
Forchheimergasse 7 Postfach 56, A-1233 Wien (AT)
(84) Benannte Vertragsstaaten: AT

(72) Erfinder: Meier, Hans, An der Kirche 6,
D-5828 Ennepetal-Voerde (DE)

(74) Vertreter: Helm, Johann-Ludwig, c/o Joh. Vaillant GmbH
u. Co Berghauser Strasse 40, D-5630 Remscheid (DE)

Die vorliegende Erfindung bezieht sich auf einen Gasdruckregler gemäss dem Oberbegriff des Hauptanspruchs.

Ein solcher aus der DE-B-Nr. 1 550 293 bekannter Regler weist einen Temperaturfühler auf, der nach dem Ausdehnungsprinzip arbeitet und über einen thermischen Stellmotor und ein Hebelwerk auf die Vorspannung einer Feder Einfluss nimmt, um den Sollwert eines Gasdrucks in einer Steuerkammer zu ändern. Die Veränderung des Sollwertes ruft einen veränderten Gasdurchsatz durch den Regler hervor, der wiederum zu einer sich ändernden Beheizung einer gasbeheizten Wärmequelle führt, wobei dieser sich ändernde Zustand wieder auf den Temperaturfühler wirkt.

Durch die Verwendung eines Ausdehnungsfühlers und eines Hebelgetriebes liegt auf der Hand, dass ein solcher Gasdruckregler eine relativ grosse Hysterese und weiterhin eine nicht zu vernachlässigende Totzeit beim Ansprechen auf eine Regelabweichung aufweist.

Der vorliegenden Erfindung liegt mithin die Aufgabe zugrunde, eine praktisch hysteresefreie Steuerbarkeit des Gasstromes mit minimaler Totzeit unter Verwendung einfachster technischer Mittel zu verwirklichen.

Die Lösung dieser Aufgabe erfolgt erfindungsgemäss durch die im kennzeichnenden Teil des Hauptanspruchs angegebenen Merkmale. Weitere Ausgestaltungen und erfindungsgemässe Weiterbildungen ergeben sich aus den Unteransprüchen.

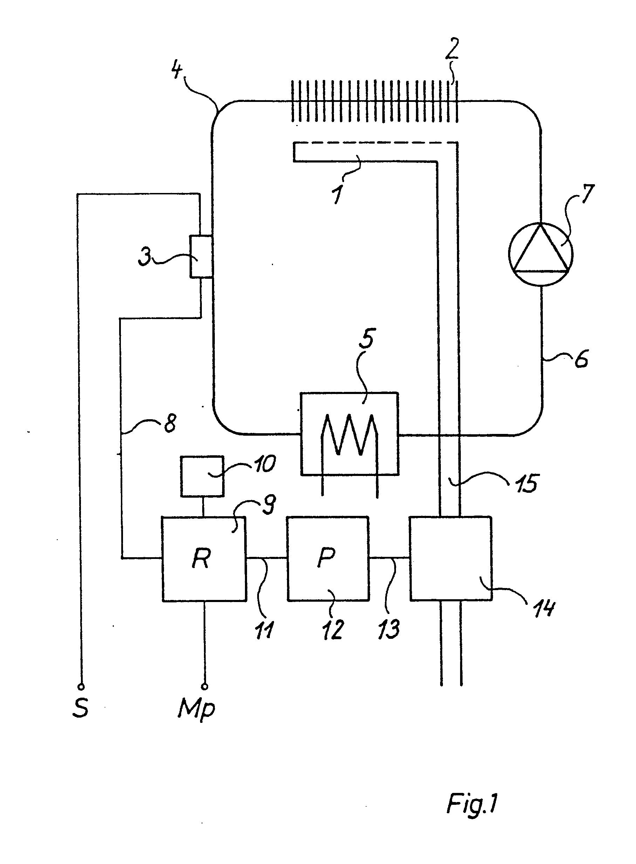

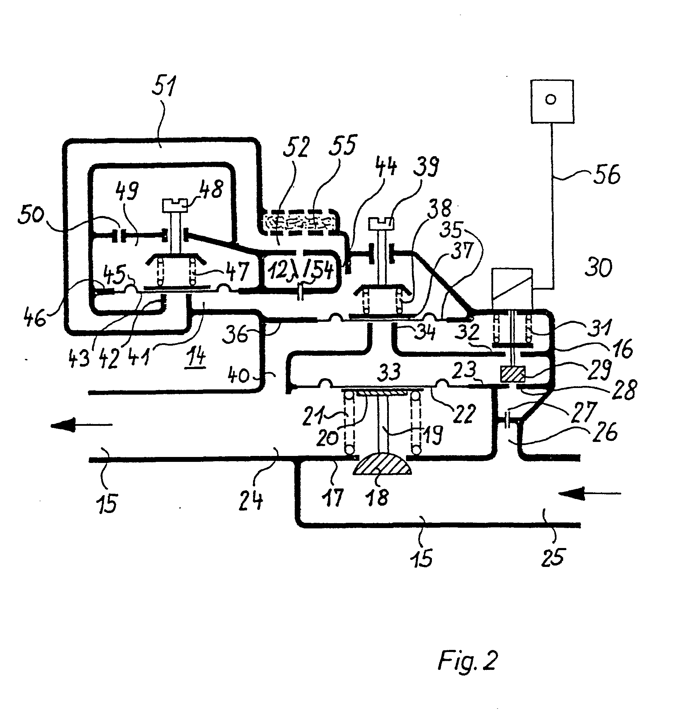

Anhand der Fig. 1 und 2 der Zeichnung ist ein Ausführungsbeispiel der Erfindung im einzelnen erläutert.

Es zeigen Fig. 1 ein Schema einer Heizungsanlage und Fig. 2 den eigentlichen Gasdruckregler. In beiden Figuren bedeuten gleiche Bezugszeichen jeweils die gleichen Einzelheiten.

Die Heizungsanlage gemäss Fig. 1 besteht aus einem von einem Brenner 1 beheizten Wärmetauscher 2, von dem eine mit einem Vorlauftemperaturfühler in Form eines PTC-Widerstandes 3 abgefühlte Vorlaufleitung 4 abgeht, die zu einem Brauchwasserwärmetauscher 5 und/oder einem anderen Verbraucher, wie einer Vielzahl parallel geschalteter Radiatoren, führt, von dem oder denen eine Rücklaufleitung 6, in die eine Pumpe 7 geschaltet ist, zurück zum Wärmetauscher 2 führt.

Der PTC-Widerstand ist an ein Netz S, Mp angeschlossen und liegt im Zuge einer Leitung 8, die zu einem Regler 9 führt. Dem Regler 9 kann ein Sollwert über einen Sollwertgeber 10 zugeführt werden. Der Reglerausgang ist über eine Leitung 11 auf eine Membranpumpe 12 gegeben, deren Ausgangsdruck über eine Leitung 13 dem Gasdruckregler 14 zugeführt ist, der eine Gaszufuhrleitung 15 zum Brenner 1 beherrscht.

Der Gasdruckregler 14, der in Fig. 2 näher dargestellt ist, besteht aus einem Gehäuse 16, das von der Gaszufuhrleitung 15 für den Brenner durchsetzt ist. Die Leitung 15 ist von einem Ventilsitz 17 unterbrochen, der von einem Ventilkörper 18 verschlossen werden kann. Der Ventilkörper 18 ist an einer Stange 19 befestigt, die an ihrem dem Ventilkörper abgewandten Ende einen Membranteller 20 aufweist, der von einer Druckfeder 21 beaufschlagt ist, die das Bestreben hat, im Ruhezustand den Ventilkörper 18 gegen den Sitz 17 zu drücken.

Der Membranteller 20 liegt an der Unterseite einer Membrane 22 an, die im Gehäuse 16 druckdicht längs ihres Umfangs 23 eingespannt ist. Somit ergibt sich eine Auslasskammer 24, zu der der Brennerdruck gehört, und eine Einlasskammer 25, die dem Druck des zuströmenden Gases zugehörig ist. Die Einlasskammer 25 steht über einen Kanal 26, in dem eine Drossel 27 angeordnet ist, mit einem Ventilsitz 28 eines Schaltventils in Verbindung, dessen Ventilkörper 29 von einer Magnetspule 30 gegen die Rückstellkraft einer Feder 31 betätigbar ist. Der Ventilkörper 29 nimmt in der Ruhestellung ein Verschliessen des Ventilsitzes 28 vor, bei Stromfluss durch die Spule 30 findet ein Verschliessen eines oberen Ventilsitzes 32 statt. Zwischen den Ventilsitzen 28 und 32 befindet sich eine zweite Membrankammer 33, die von einem Ventilsitz 34 verschliessbar ist, dessen zugehöriger Ventilkörper aus einer Hilfsmembran 35 besteht, die wiederum an ihrem Umfang 36 druckdicht in das Gehäuse 16 eingespannt ist. Die Hilfsmembran 35 weist einen Teller 37 auf, der über eine Feder 38 und eine Schraube 39 eingestellt werden kann, so dass die Membranbelastung variiert werden kann, bei der das Ventil 34, 35 öffnet.

Die Ventilsitze 32 und 34 sind über eine Steuerleitung 40 mit der Auslasskammer 24 verbunden.

Oberhalb der Hilfsmembran 35 befindet sich ein Druckraum 41, der gegenüber der Aussenatmosphäre durch ein Ventil mit einem Ventilsitz 42 und einem Ventilkörper 43 verschlossen bzw. durch eine Drossel 44 verbunden ist. Der Ventilkörper 43 besteht aus einem an einem Membran 45 befestigten Membranteller, die Membran ist längs ihres Umfanges 46 druckdicht im Gehäuse 16 eingespannt. Die Membran steht unter der Wirkung einer Druckfeder 47, die mit Hilfe einer Schraube 48 vorgespannt werden kann. Der Raum 49 oberhalb der Membran ist über eine Entlüftungsdrossel 50 mit der Atmosphäre verbunden.

An den Ventilsitz 42 schliesst sich eine Druckabführleitung 51 an, die in einem Pumpeneinlassraum 52 mündet. Der Einlassraum 52 ist an der Membranluftpumpe 12 vorgeschaltet, deren Auslass über eine Drossel 54 mit dem Druckraum 41 in Verbindung steht. Die Drossel 44 verbindet den Pumpeneinlassraum 52 mit dem Druckraum 41. Der Pumpeneinlassraum 52 ist über einen Filter 55 mit der Atmosphäre verbunden.

Die Magnetspule 30 des Schaltventils 29, 28, 32 ist von dem Netz S, Mp beaufschlagt. Im Zuge der Ansteuerleitung 56 liegt ein nicht dargestellter Raumthermostat oder ein Wärmefühler 53 im Bereich des Brauchwasserbereiters 5 oder des Vorlauftemperaturfühlers 3.

Vorzugsweise wird zum Antrieb der Membranluftpumpe 12 ein Schwingankersystem verwendet, das mit einer Wechselspannung variabler Amplitude beaufschlagt ist und bei dem die Schwingungsamplitude und damit die Förderleistung von der Wechselspannungsamplitude abhängt. Die Wechselspannung kann eine sinusförmige Wechselspannung sein, die über eine Phasenanschnittssteuerung auf den Pumpenmotor gegeben ist, es können auch Impulsspannungen beliebiger Form und Frequenz zur Anwendung kommen.

Der eben dargestellte Regler besitzt folgende Funktion: Im Ruhezustand ist die Magnetspule 30 stromlos, d.h., der Ventilkörper 29 verschliesst den Ventilsitz 28. Der Ventilkörper 18 liegt auf dem Sitz 17 auf und sperrt den Gasdurchlass in der Gasleitung 15. Der Ventilsitz 34 ist vom Ventilkörper 35 verschlossen, desgleichen ist der Ventilsitz 42 vom Ventilkörper 43 verschlossen. Die Membranluftpumpe 12 ist in Ruhe, ihr Motor im Ausgang des Reglers 9 ist stromlos. Die Einlasskammer 25 des Druckreglers ist von einem Gasdruck beaufschlagt, der oberhalb des Atmosphärdrucks liegt. Soll nunmehr die Wärmequelle, bestehend aus Brenner 1 und Wärmetauscher 2, in Betrieb genommen werden, so muss hierzu ein entsprechendes Signal von einem Raumthermostaten, Brauchwassertemperaturregler oder Vorlauftemperaturregler gegeben werden. Im Ausführungsbeispiel sinkt der Widerstand des PTC-Widerstandes im Zuge des Vorlauftemperaturfühlers 3 bei abkühlender Vorlauftemperatur unter einen bestimmten Wert. Mit diesem Wert wird der Regler 9 beaufschlagt. Gleichzeitig resultiert ein Stromfluss auf der Leitung 56, so dass die Spule 30 unter Spannung steht. Als Folge dieser Massnahme hebt der Ventilkörper 29 vom Ventilsitz 28 ab und verschliesst nunmehr den Ventilsitz 32. Nunmehr steht die Kammer 33, verzögert durch die Drossel 27, unter dem Druck der Einlasskammer 25. Das bedeutet, dass der Ventilkörper 18 entgegen der Wirkung der Feder 21 von seinem Sitz 17 abgehoben wird, so dass dem Brenner 1 Gas über die Leitung 15 zugeführt werden kann. Der Gasdruck wird bestimmt durch die Feder 38 und stellt die kleinste Belastung des Brenners 1 dar. Dieses Gas wird auf nicht dargestellte Weise entzündet und im Brenner 1 verbrannt.

Die Pumpe 12 baut über die Drossel 54 in dem Druckraum 41 einen Druck auf, der um so grösser ist, je grösser die über den Messfühler 3 gefühlte Regelabweichung ausfällt. Je höher der Druck in dem Druckraum 41 ist, um so mehr addiert sich diese Druckwirkung zu der Federkraft der Feder 38, so dass der Ventilsitz 34 vom Ventilkörper 35 geschlossen wird. Das bedeutet, dass sich der Eingangsvordruck in der Kammer 33 um so mehr auswirken kann, d. h. den Ventilkörper 18 öffnet. Je mehr der Vordruck in dem Druckraum 41 abgebaut wird, um so früher öffnet das Ventil 34, 35 mit der Folge eines entsprechenden Druckabbaus in der Kammer 33, was eine Bewegung des Ventilkörpers 18 in Richtung Schliessen zur Folge hat.

Um den Druck in dem Druckraum 41 und den daraus resultierenden maximalen Brennerdruck auf ein bestimmtes Mass zu begrenzen, kann bei zu grossem Druck in dem Druckraum 41 dieser durch Abheben des Ventilkörpers 43 von dem Ventilsitz 42 begrenzt werden. Das hier abströmende Gas wird aber der Pumpeneinlasseite über den Raum 52 wieder zugeführt. Hierdurch wird sichergestellt, dass die Pumpe einen Gaskreislauf fördert, so dass vermieden wird, verschmutztes Gas aus der Atmosphäre über das Filter 55 anzusaugen. Der Druckraum 41 wird auch über die Drossel 44 druckmässig entlastet, auch dieses Gas bzw. diese Luft wird dem Pumpeneinlassraum 52 zugeführt.

Reicht die in dieser Brennstellung erreichte Wärmeleistung zur Deckung des augenblicklichen Wärmebedarfs nicht aus, so wird die Erregung, z.B. die Betriebsspannung der Membranluftpumpe 12, durch den Regler 9 entsprechend der Temperaturabweichung zwischen PTC-Widerstand 3 und Sollwert 10 eingeschaltet.

Der Druckregler kann ausser Funktion gesetzt werden, indem das Spannungssignal auf der Leitung 56, das von einem Raumthermostaten oder einem Brauchwasserfühler stammen kann, unterbrochen wird. Hierbei wird wieder der Ventilsitz 28 vom Ventilkörper 29 verschlossen, so dass die Kammer 33 nur noch nicht unter dem Druck der Auslasskammer 24 steht, da der Überdruck in der Kammer 33 über das nunmehr offene Ventil 32, 29 abströmt. Durch den Druck der Feder 21 wird der Ventilkörper 18 auf den Sitz 17 gedrückt. Gleichzeitig veranlasst der Regler 9 ein Spannungsloswerden des Pumpenmotors, so dass die Membranluftpumpe 12 zu arbeiten aufhört.

**Patentansprüche**

1. Gasdruckregler (14) mit einer in seinem Gehäuse (16) angeordneten Einlasskammer (25), die über einen von einem Ventilkörper (18) beherrschten Ventilsitz (17) mit einer Auslasskammer (24) in Verbindung steht, wobei der Ventilkörper (18) von einer Feder (21) und einer Membran (22) beaufschlagt ist, deren eine Seite die Auslasskammer (24) und deren andere Seite eine mit der Einlasskammer (25) in Verbindung stehende Steuerkammer (33) begrenzt, wobei die Verbindung zur Einlasskammer von einem Ventil (28, 29) beherrscht ist und ein zweites Ventil vorgesehen ist, welches eine mit einer zweiten Feder (38) beaufschlagte Hilfsmembran (35) als Ventilkörper aufweist und die Steuerkammer (33) nach Massgabe eines eingestellten Sollwertes über eine Steuerleitung (40) mit der Auslasskammer (24) verbindet, dadurch gekennzeichnet, dass die Hilfsmembran (35) einen Druckraum (41) begrenzt, der von einer leistungssteuerbaren Fluidpumpe (12) beaufschlagt wird im Sinne einer Änderung des durch die zweite Feder (38) eingestellten Sollwertes.

2. Gasdruckregler nach Anspruch 1, dadurch gekennzeichnet, dass der Auslass der Fluidpumpe (12) über eine Drossel (44) mit dem Einlassraum (52) der Fluidpumpe verbunden ist.

3. Gasdruckregler nach Anspruch 2, dadurch gekennzeichnet, dass der Auslass der Fluidpumpe (12) über ein Druckbegrenzungsventil (42, 43) und über eine Entlüftungsleitung (51) mit dem Pumpeneinlassraum (52) verbunden ist.

4. Gasdruckregler nach einem der Ansprüche 1 bis 3, dadurch gekennzeichnet, dass der Pumpeneinlassraum (52) zwischen einem zur Atmosphäre hin offenen Filter (55) und der Ansaugöffnung der Fluidpumpe angeordnet ist.

## Claims

1. A gas pressure regulator (14) comprising an inlet chamber (25), which is disposed in the housing (16) of the regulator and communicates with an outlet chamber (24) through a valve seat (17), which is controlled by a valve member (18), which is acted upon by a spring (21) and a diaphragm (22), one side of which defines the outlet chamber (24) and the other side of which defines a control chamber (33), which communicates with the inlet chamber (25), wherein the connection to the inlet chamber is controlled by a valve (28, 29) and a second valve (34) is provided, which has a valve member consisting of an auxiliary diaphragm (35) acted upon by a second spring (38) and connects the control chamber (33) via a control conduit (40) to the outlet chamber in accordance with an adjusted set point, characterized in that the auxiliary diaphragm (35) defines a pressure chamber (41), which is supplied with fluid from a power-adjustable fluid pump (12) to change the set point that is adjusted by the second spring (38).

2. A gas pressure regulator according to claim 1, characterized in that the outlet of the fluid pump (12) is connected by a throttle (44) to the inlet chamber (52) of the fluid pump.

3. A gas pressure regulator according to claim 2, characterized in that the outlet of the fluid pump (12) is connected to the inlet chamber (52) of the pump by a pressure-limiting valve (42, 43) and a venting conduit (51).

4. A gas pressure regulator according to any of claims 1 to 3, characterized in that the pump inlet chamber (52) is disposed between a filter (55), which is open to the atmosphere, and the suction opening of the fluid pump.

## Revendications

1. Régulateur de pression de gaz (14) comportant une chambre d'entrée (25) disposée dans le boîtier (16) dudit régulateur et qui, par l'intermédiaire d'un siège de soupape (17) et d'un obturateur (18), est en communication avec une chambre de sortie (24), ledit obturateur (18) étant soumis à l'action d'un ressort (21) et d'une membrane (22) qui délimite par une face la chambre de sortie (24) et par l'autre face une chambre de commande (33) qui est en communication avec la chambre d'entrée (25), la liaison entre ces deux chambres étant munie d'une soupape (28, 29), une deuxième soupape (34) étant prévue dont l'obturateur est une membrane auxiliaire (35) soumise à l'action d'un deuxième ressort (38) et qui met en communication, en fonction d'une consigne préréglée, la chambre de commande (33), par l'intermédiaire d'une conduite (40), avec la chambre de sortie (24), régulateur caractérisé par le fait que la membrane auxiliaire (35) délimite une chambre de pression (41) alimentée par une pompe à fluides (12) à débit variable dans le but de modifier une consigne réglée par le deuxième ressort (38).

2. Régulateur de pression de gaz selon la revendication 1, caractérisé par le fait que la sortie de la pompe (12) est mise en communication avec la chambre d'entrée (52) de ladite pompe par un orifice calibré (44).

3. Régulateur de pression de gaz selon la revendication 2, caractérisé par le fait que la sortie de la pompe (12) est mise en communication avec la chambre d'entrée (52) par l'intermédiaire d'un limiteur de pression (42, 43) et d'un conduit de dégagement (51).

4. Régulateur de pression de gaz selon l'une des revendications 1 à 3, caractérisé par le fait que la chambre d'entrée (52) de la pompe est disposée entre un filtre (55) ouvert du côté de l'atmosphère, et l'orifice d'aspiration de la pompe à fluides.

Fig.1

Fig. 2